# EUROPEAN PATENT APPLICATION

(11) **EP 2 560 077 A1**
(43) Date of publication of application: **20.02.2013**
(21) Application number: 11768680.8
(22) Date of filing: 03.03.2011
(51) Int. Cl.: G06F 3/041, G06F 3/042

(54) **INPUT DISPLAY DEVICE, INPUT DEVICE, AND CONTROL METHOD OF INPUT DEVICE**

(30) Priority: 16.04.2010 JP 2010095291
(71) Applicant: Sharp Kabushiki Kaisha, Osaka-shi, Osaka 545-8522 (JP)
(72) Inventor: HATA, Masayuki, Osaka 545-8522 (JP); NAKAGAWA, Toshiaki, Osaka 545-8522 (JP); YOSHIMIZU, Toshiyuki, Osaka 545-8522 (JP); NOMA, Mikihiro, Osaka 545-8522 (JP); NAKAYA, Mitsuyoshi, Osaka 545-8522 (JP)
(74) Representative: Goddar, Heinz J.
(86) International application number: PCT/JP2011/054940
(87) International publication number: WO 2011/129159

(57) **Abstract**

The present invention provides an input display device including: a display device which recognizes an input position with a light sensor by blinking a backlight; and an input device of a light-emitting type (light pen), wherein a light emitting diode (LED) of the input device is adapted so that (i) its non-light-emitting period overlaps at least a part of a period (X) during which the backlight is OFF and (ii) its light-emitting period overlaps at least a part of a period (Y) during which the backlight is ON. According to this arrangement, it is possible to realize an input display device which can reduce the effect of ambient light and in which a light pen can be used (in addition to a finger and a reflective pen etc.) as inputting means.

## Description

### Technical Field

The present invention relates to an input display device in which a light-emitting type input device (e.g. a light pen) can be used.

### Background Art

Patent Literature 1 discloses an input display device which recognizes a touch position (input position) by (i) allowing light from a backlight to be reflected by a tip of a finger or a reflection pen and (ii) detecting the light by a light sensor provided in a touch panel. For the purpose of reducing the effect of ambient light (sunlight or illumination) from the input side (side on which the finger or the reflective pen is located), the input display device of Patent Literature 1 is arranged to recognize a touch position on the basis of a difference between (i) a result of detection by the light sensor when the backlight is ON (ambient light + reflected light) and (ii) a result of detection by the light sensor when the backlight is OFF (ambient light only).

### Citation List

Patent Literature 1
   Japanese Patent Publication No. 4072732 B

### Summary of Invention

### Technical Problem

In recent years, a light pen (a light-emitting type input device) has been proposed for the purpose of for example improving a degree of accuracy of recognition of a touch position. However, when a light pen is used in the input display device of Patent Literature 1, the following problem occurs. That is, the result of detection when the backlight is ON becomes substantially the same as that when the backlight is OFF (i.e., the difference between the results is substantially zero), so that it is not possible to properly recognize the touch position.

The present invention proposes an input display device (i) which can reduce the effect of ambient light and (ii) in which not only a finger and a reflective pen etc. but also a light-emitting type input device (e.g. a light pen) can be used.

### Solution to Problem

An input display device of the present invention includes: a display device which recognizes an input position with a light sensor by blinking a backlight; and an input device of a light-emitting type, the input device being adapted so that (i) its light-emitting period overlaps at least a part of a period during which the backlight is ON and (ii) its non-light-emitting period overlaps at least a part of a period during which the backlight is OFF.

According to the above arrangement, for example, by carrying out recognition of an input position on the basis of (i) a result of detection by the light sensor in a period during which the backlight is ON and the input device is in its light-emitting state and (ii) a result of detection by the light sensor in a period during which the backlight is OFF and the input device is in its non-light-emitting state, it is possible to realize an input display device which can reduce the effect of ambient light and in which not only a finger and a reflective pen etc. but also a light-emitting type input device (e.g. a light pen) can be used. Note that the backlight can be (i) an illumination device for a display or (ii) a device provided for detection (detection light emitting device, e.g., invisible light generating device) which device is provided separately from the illumination device for a display.

### Advantageous Effects of Invention

According to the present invention, it is possible to realize an input display device (i) which reduces the effect of ambient light and (ii) in which not only a finger and a reflective pen etc. but also a light-emitting type input device (e.g. a light pen) can be used.

### Brief Description of Drawings

Fig. 1

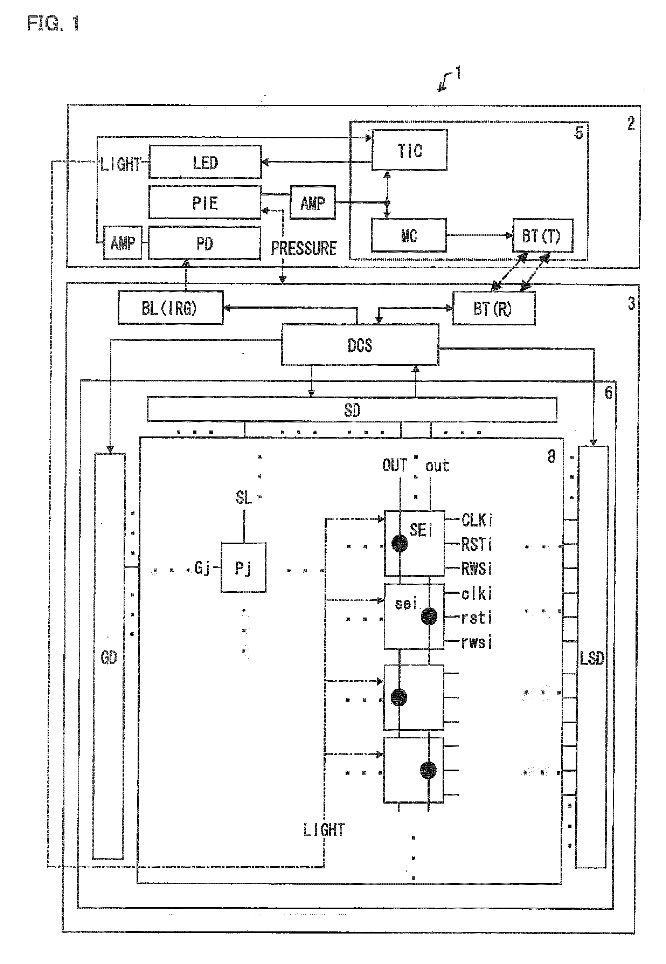

   Fig. 1 is a block diagram showing an arrangement of an input display device of the present embodiment.
Fig. 2

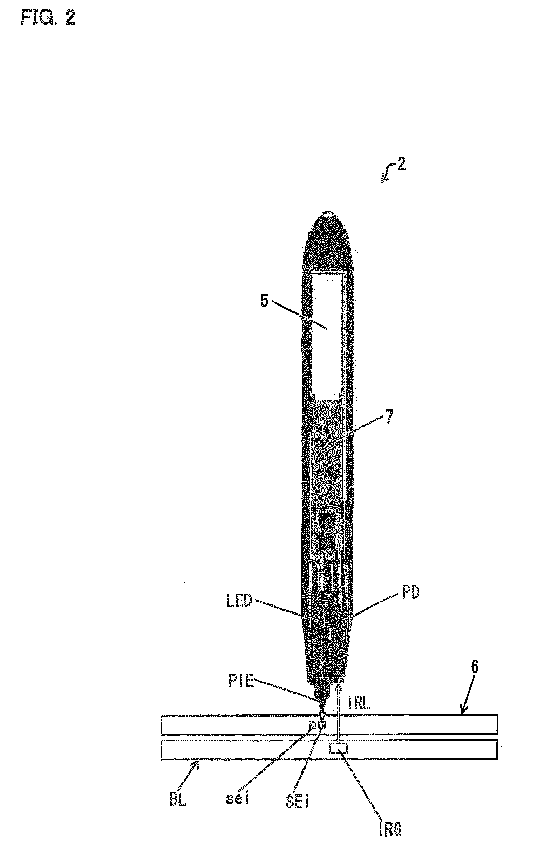

   Fig. 2 is a cross-sectional view showing one specific example of the input display device.
Fig. 3

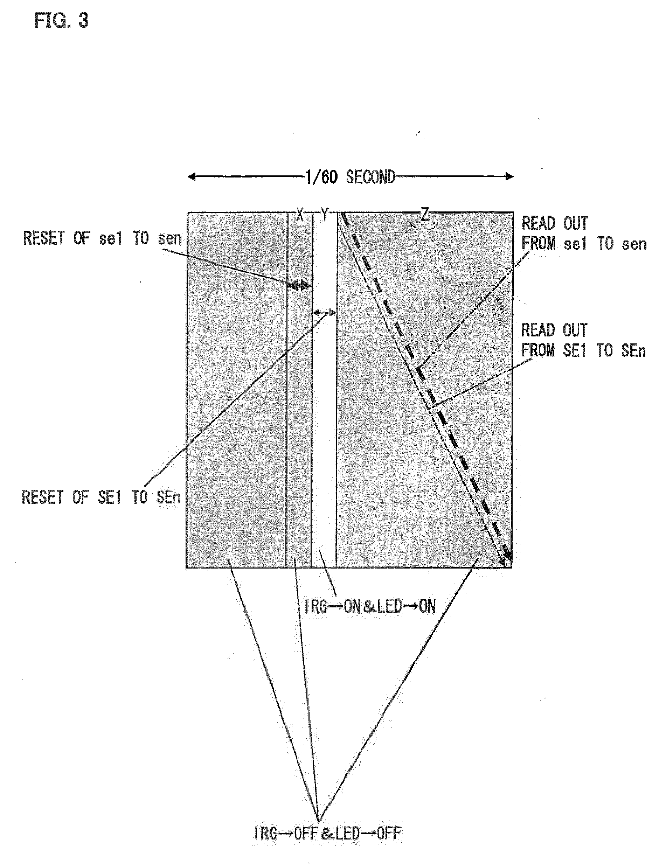

   Fig. 3 is a view schematically showing a driving method for the input display device shown in Fig. 1.
Fig. 4

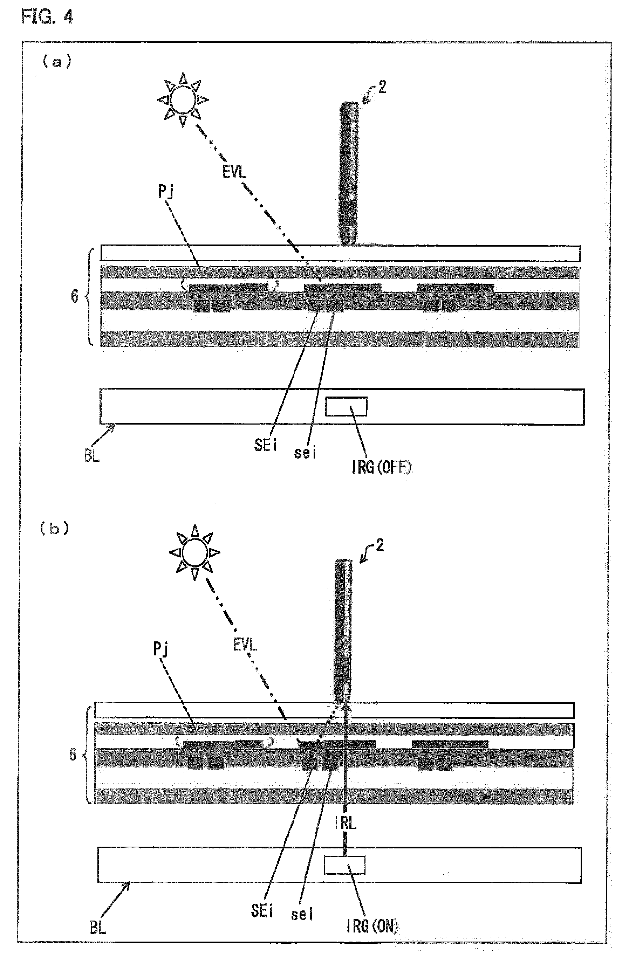

   Fig. 4 is a cross-sectional view showing a principle of operation (when a light pen is used) of the input display device.
Fig. 5

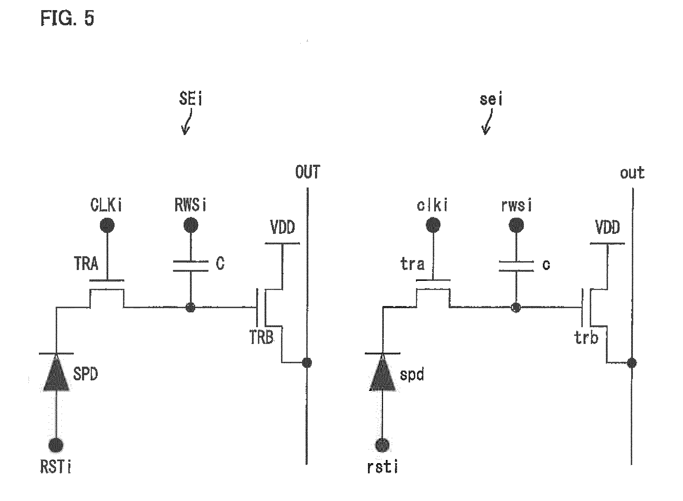

   Fig. 5 is a circuit diagram showing configurations of first and second light sensor circuits shown in Fig. 1.
Fig. 6

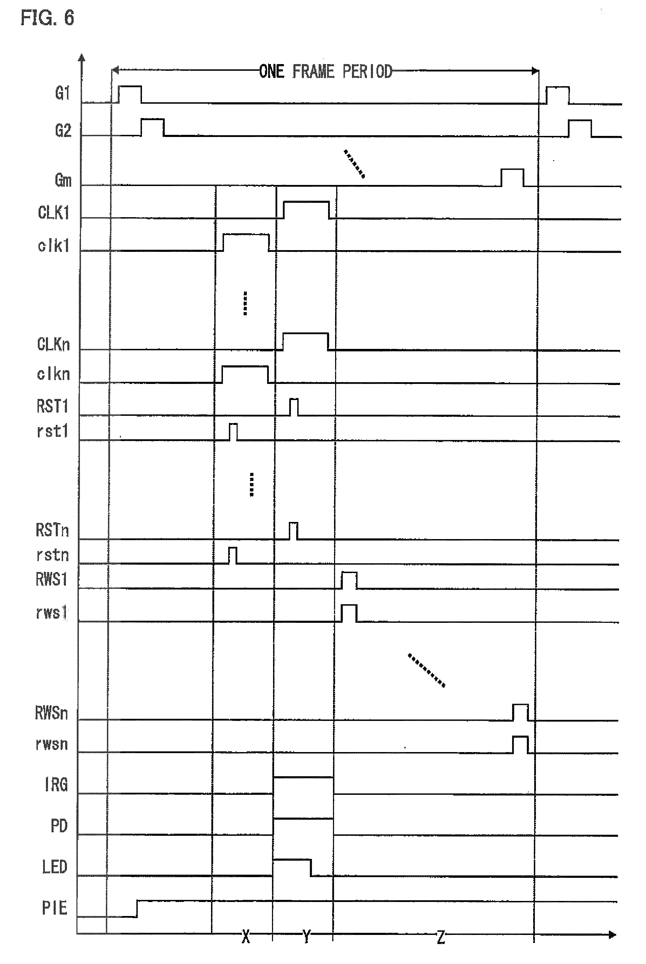

   Fig. 6 is a timing chart showing a driving method for the input display device shown in Fig. 1.
Fig. 7

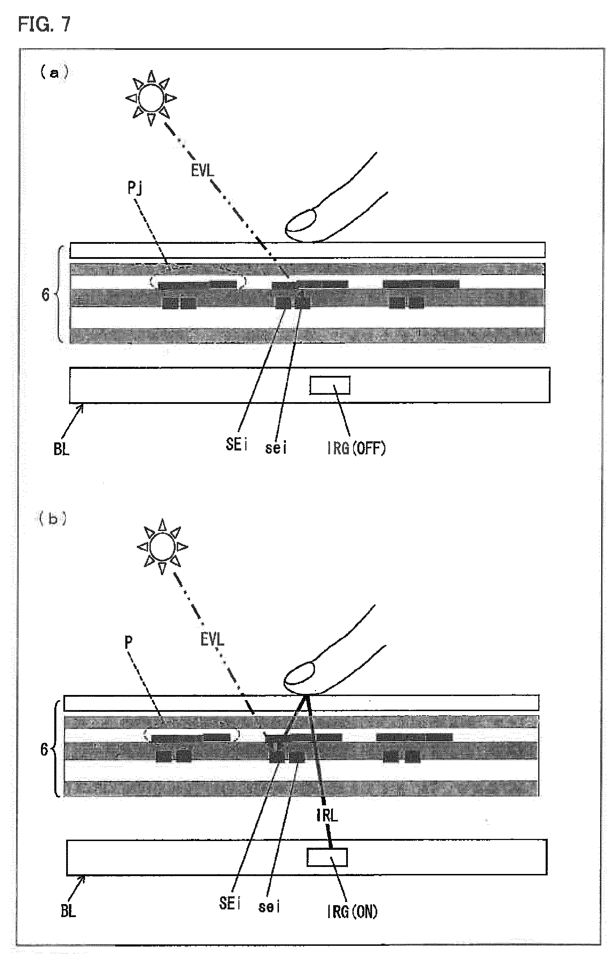

   Fig. 7 is a cross-sectional view showing a principle of operation (when a finger is used) of the input display device shown in Fig. 1.
Fig. 8

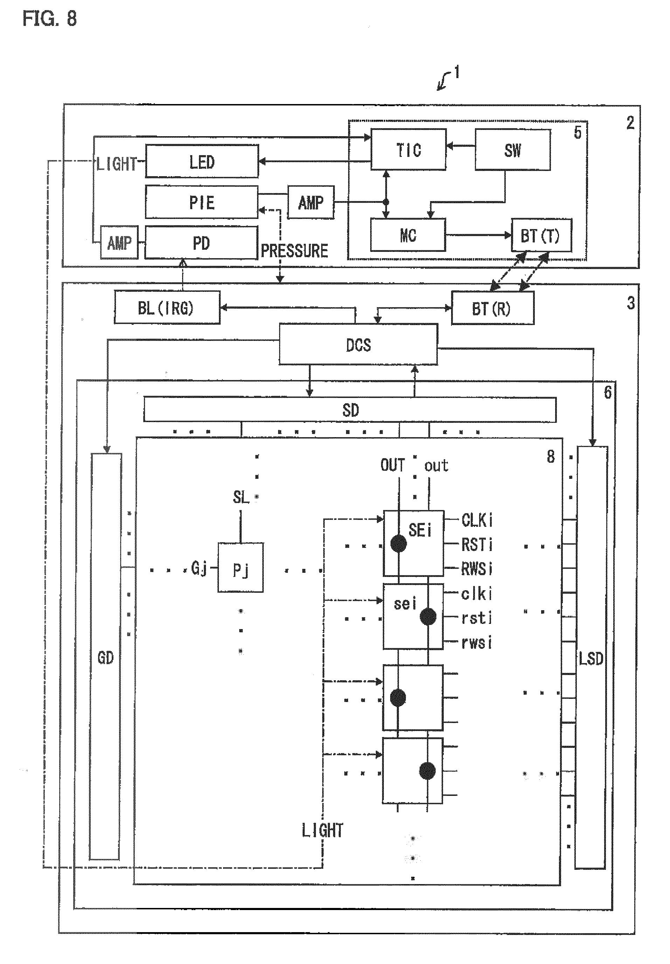

   Fig. 8 is a block diagram showing another example of an arrangement of the input display device.
Fig. 9

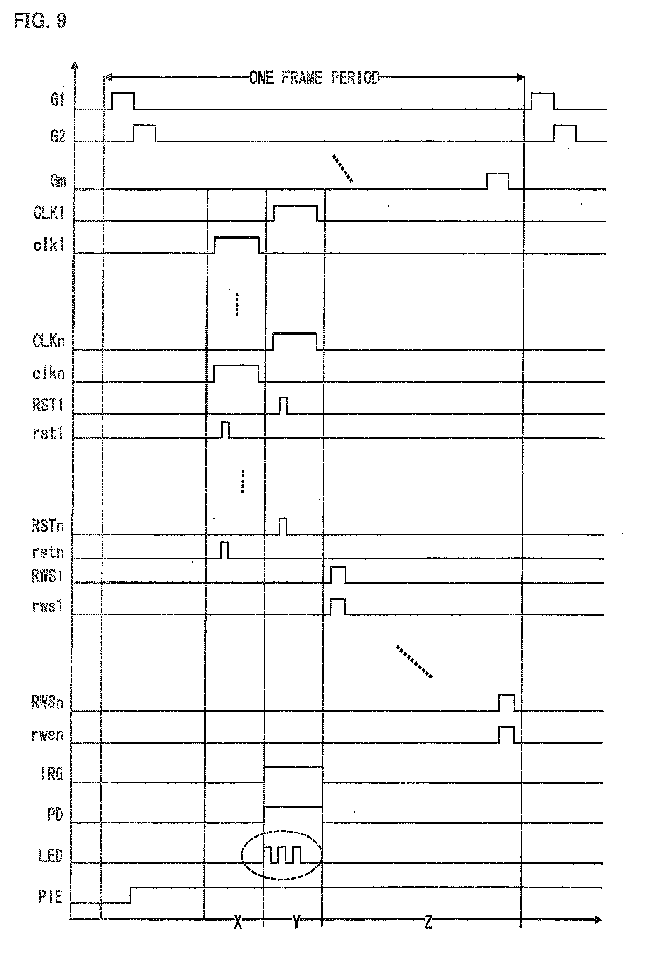

   Fig. 9 is a timing chart showing a driving method for the input display device shown in Fig. 8.
Fig. 10

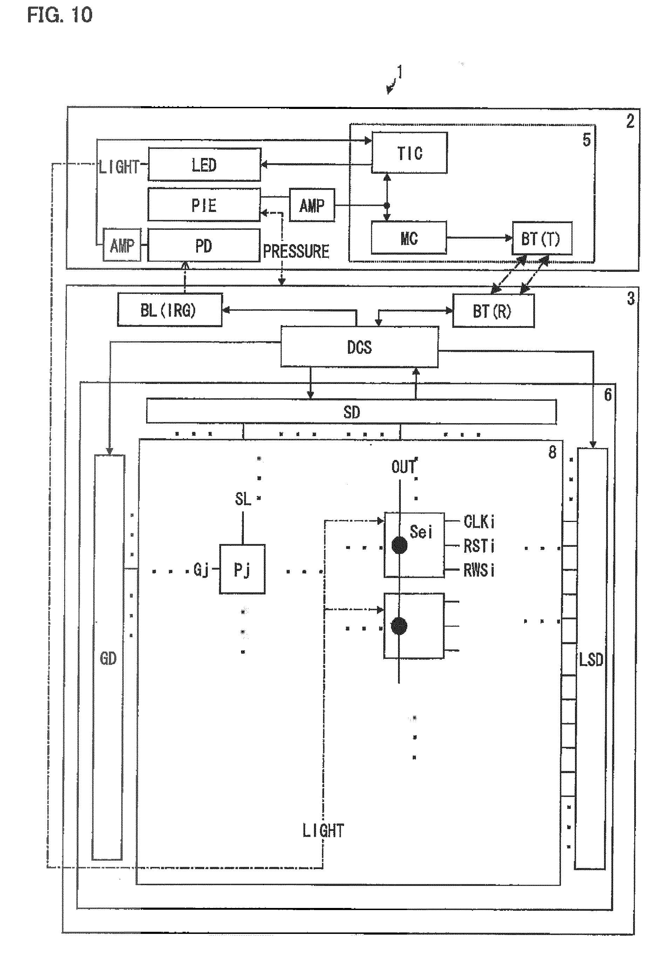

   Fig. 10 is a block diagram showing a further example of an arrangement of the input display device.
Fig. 11

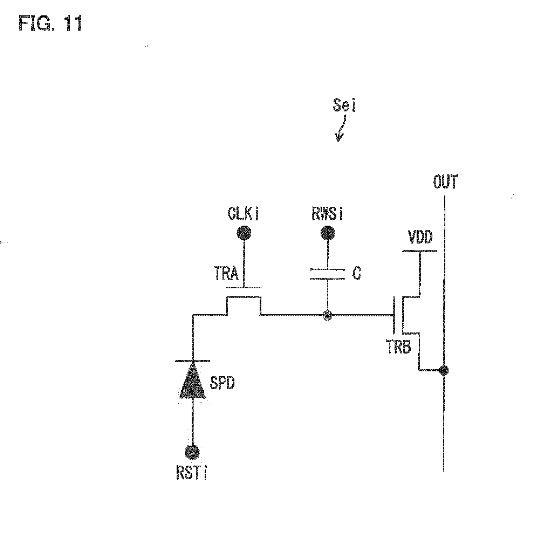

   Fig. 11 is a circuit diagram showing a configuration of a light sensor circuit shown in Fig. 10.
Fig. 12

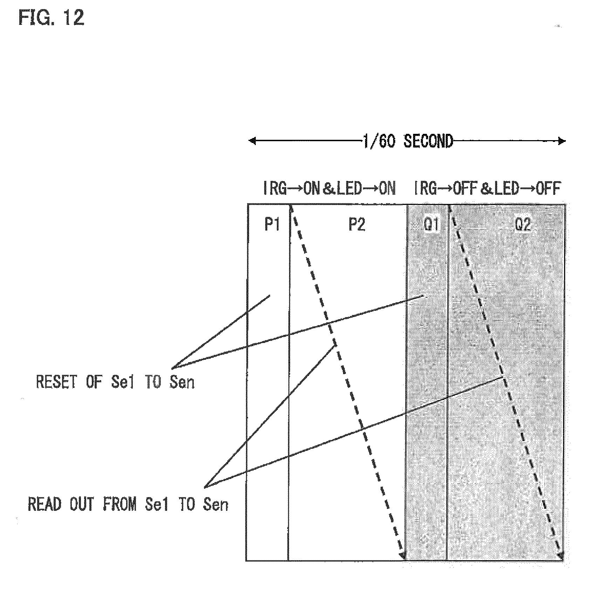

   Fig. 12 is a view schematically showing a driving method for the input display device shown in Fig. 10.
Fig. 13

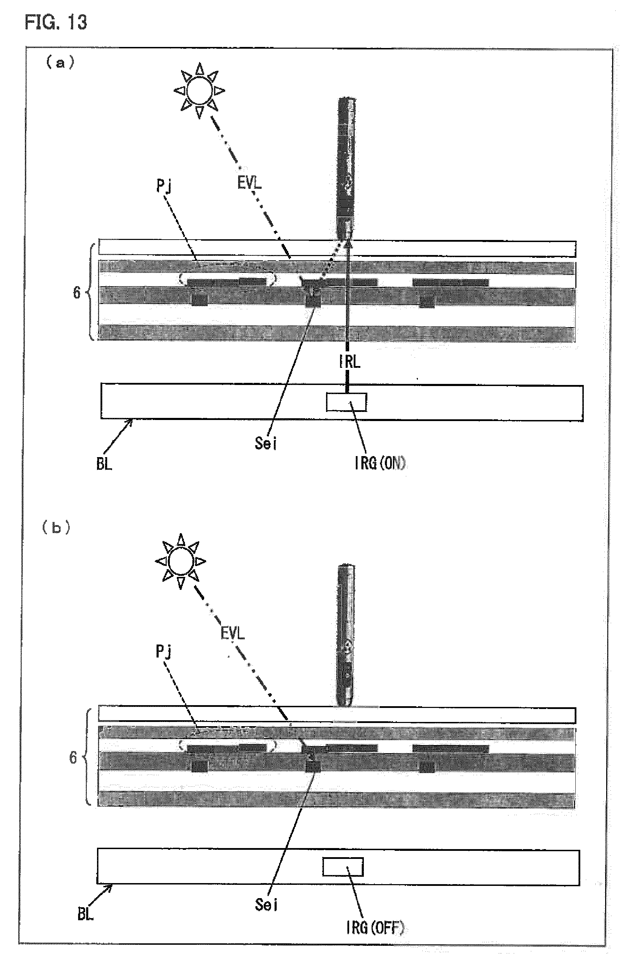

   Fig. 13 is a cross-sectional view showing a principle of operation (when a light pen is used) of the input display device shown in Fig. 1.
Fig. 14

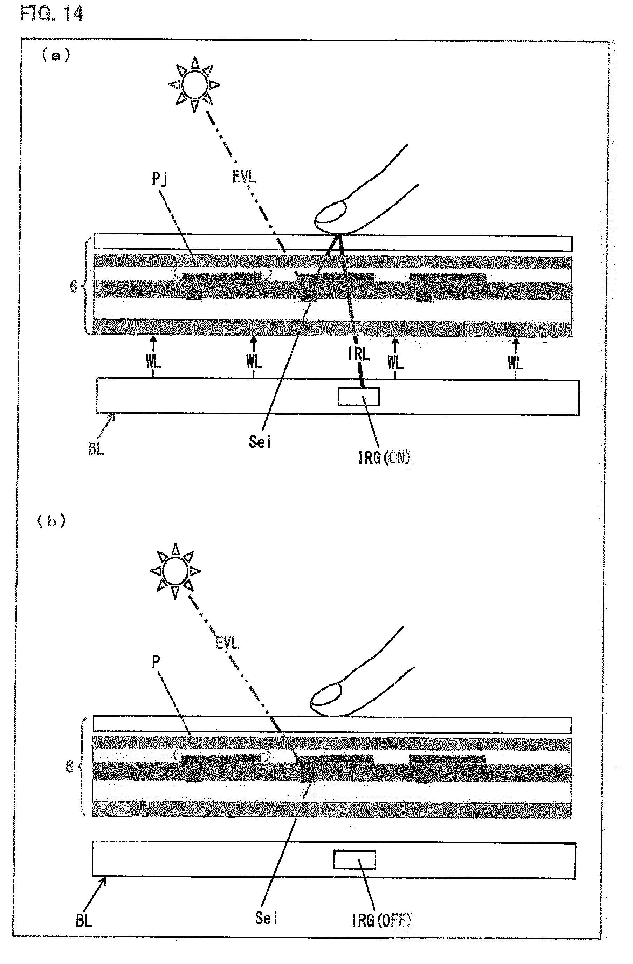

   Fig. 14 is a cross-sectional view showing a principle of operation (when a finger is used) of the input display device shown in Fig. 10.

### Description of Embodiments

The following description discusses embodiments of the present invention with reference to Figs. 1 to 14. As illustrated in Fig. 1, an input display device 1 in accordance with the present embodiment includes a light pen 2 (input device) and a display device 3. The light pen 2 includes a light emitting diode LED, a pressure element PIE, a photodiode device PD, a control substrate 5, and two amplifier circuits AMP. The control substrate 5 includes a timing IC (TIC), a microcomputer MC, and a Bluetooth transmission circuit BT (T). The display device (liquid crystal display device) 3 includes a light sensor touch panel 6, a display control circuit DCS, a backlight BL (including an infrared light generating section IRG), and a Bluetooth receive circuit BT (R).

The light sensor touch panel includes a display section 8, a source driver SD, a gate driver GD, and a light sensor driving circuit LSD. The display section 8 is provided with a plurality of liquid crystal pixels (including Pj) arranged in a matrix manner, a plurality of scanning signal lines (including Gj), a plurality of data signal lines (including SL), a plurality of first light sensor circuits (including SEi) arranged in a matrix manner, a plurality of second light sensor circuits (including sei) arranged in a matrix manner, a plurality of first clock signal lines (including CLKi), a plurality of second clock signal lines (including clki), a plurality of first reset signal lines (including RSTi), a plurality of second reset signal lines (including rsti), a plurality of first read-out signal lines (including RWSi), a plurality of second read-out signal lines (including rwsi), a plurality of first light sensor output lines (including OUT), and a plurality of second light sensor output lines (including out) (note that i = 1 to n, j = 1 to m). Note that a liquid crystal pixel (Pj) is provided with a pixel electrode (not illustrated) facing a common electrode via a liquid crystal layer. This pixel electrode is connected to a data signal line SL and a scanning signal line Gj via a pixel transistor (TFT).

The display control circuit DCS controls the source driver SD, the gate driver GD, the light sensor driving circuit LSD, and the backlight BL (including the infrared light generating section IRG). Furthermore, (i) the gate driver GD drives the scanning signal lines Gj, (iii) the source driver SD drives the data signal lines SL, and (iii) the light sensor driving circuit LSD drives the first clock signal lines CLKi, the second clock signal lines clki, the first reset signal lines RSTi, the second reset signal lines rsti, the first read-out signal lines RWSi, and the second read-out signal lines rwsi. The first light sensor output lines OUT and the second light sensor output lines out are connected to the display control circuit DCS via the source driver SD.

Fig. 2 shows a specific example of the input display device 1. As illustrated in Fig. 2, the light pen 2 includes a battery 7 provided in the middle of the light pen 2, the control substrate 5 provided on the pen's rear side of the battery 7, the LED and the photodiode PD provided on the pen tip side of the battery 7, and the pressure element PIE provided at the pen tip. The input display device 1 is arranged such that (i) the pressure element PIE detects pressure between the tip of the light pen 2 and a surface of the light sensor touch panel 6, (ii) the first light sensor circuits SEi of the light sensor touch panel 6 detect light emitted from the LED and (iii) the photodiode PD receives infrared light IRL emitted from the infrared light generating section IRG in the backlight BL.

As described above, the light pen 2 is arranged such that infrared light emitted from the infrared light generating section IRG is detectable by the photodiode PD. The result of detection is supplied to the timing IC (TIC) via an amplifier AMP. Further, the light pen 2 is arranged such that pressure between the tip of the light pen 2 and the surface of the light sensor touch panel 6 is detectable by the pressure element PIE. The result of detection is supplied to the timing IC (TIC) via an amplifier AMP.

The timing IC controls light emission from the LED on the basis of these results of detection (the result of detection by the photodiode PD and the result of detection by the pressure element PIE). Specifically, as shown in Fig. 3, the timing IC (i) brings the LED into its non-light-emitting state so that its non-light-emitting period overlaps at least a part of a period X during which the infrared light generating section IRG is OFF (a period during which no infrared light is emitted), and (ii) when the result of detection (pressure) by the pressure element PIE is equal to or greater than a threshold, brings the LED into its light-emitting state so that its light-emitting period overlaps at least a part of a period Y during which the infrared light generating section IRG is ON (a period during which infrared light is emitted). In the light sensor touch panel, (a) the second light sensor circuit sei is reset in the period X, (b) the first light sensor circuit SEi is reset in the period Y following the period X, and (c) reading from the first light sensor circuit SEi and reading from the second light sensor circuit sei are carried out concurrently in the period Z following the period Y. Note that the periods X to Z are within one framed period (1/60 second).

According to the arrangement, (i) during the period X (IRG is OFF), ambient light EVL can be detected by the second light sensor circuit sei (see (a) of Fig. 4) and (ii) during the period Y (IRG is ON), the sum of light from the LED of the light pen 2 (which is in contact with the light sensor touch panel 6) and ambient light EVL can be detected by the first light sensor circuit SEi (see (b) of Fig. 4). Then, the result of detection in the period X is supplied to the source driver SD (see Fig. 1) via the second light sensor output lines (including out shown in Fig. 1) and the result of detection in the period Y is supplied to the source driver SD (see Fig. 1) via the first light sensor output lines (including OUT shown in Fig. 1). The source driver SD supplies, to the display control circuit DSC, a difference between these results, i.e., a result of detection of only the light emitted from the LED of the light pen 2, which result is obtained by excluding ambient light. The display control circuit DCS generates, on the basis of the result of detection of only the light emitted from the LED, display data corresponding to user's input, and then supplies the display data to the source driver SD. It is assumed that light for a display, which light is generated by the BL in a transmissive touch panel, is always ON (during each of the periods X and Y).

The input display device 1 is arranged such that (i) the result of detection by the pressure element PIE is digitalized (e.g. approximately 1024 gray levels) by the microcomputer MC and (ii) a digitalized result is supplied to the display control circuit DCS via the Bluetooth transmission circuit BT (R) and the Bluetooth receive circuit BT (R).

Fig. 5 is a circuit diagram showing configurations of first and second light sensor circuits SEi and sei provided in the light sensor touch panel 6 shown in Fig. 1. As illustrated in Fig. 5, a first light sensor circuit SEi includes a photodiode SPD, a transistor TRA, a capacitor C, and a transistor TRB. Note here that an anode of the photodiode SPD is connected to a first reset signal line RSTi, a cathode of the photodiode SPD is connected to one electrode of the capacitor C and a control electrode of the transistor TRB via the transistor TRA, the other electrode of the capacitor C is connected to a first read-out signal line RWSi, a control electrode of the transistor TRA is connected to a first clock signal line CLKi, one conducting electrode of the transistor TRB is connected to VDD, and the other conducting electrode is connected to a first light sensor output line OUT. Further, the second light sensor circuit sei includes a photodiode spd, a transistor tra, a capacitor c, and a transistor trb. Note here that an anode of the photodiode spd is connected to a second reset signal line rsti, a cathode of the photodiode spd is connected to one electrode of the capacitor c and a control electrode of the transistor trb via the transistor tra, the other electrode of the capacitor c is connected to a second read-out signal line rwsi, a control electrode of the transistor tra is connected to a second clock signal line clki, one conducting electrode of the transistor trb is connected to VDD, and the other conducting electrode is connected to a second light sensor output line out.

Fig. 6 is a timing chart showing a driving method for the input display device 1 shown in Fig. 1. As shown in Fig. 6, in the period X during which the IRG is OFF (i.e., output of PD is Low) and the LED is OFF, all the second clock signal lines clki (i = 1 to n) are active (High) for a certain period. In this certain period, all the second reset signals rsti (i = 1 to n) become active (High). This causes all the second light sensor circuits sei (i = 1 to n) to be reset (the capacitors c of the second light sensor circuits sei are charged in accordance with the amount of ambient light EVL as shown in (a) of Fig. 4). Next, in the period Y during which the IRG is ON (i.e., output of PD is High) and the LED is ON, all the first clock signal lines CLKi (i = 1 to n) are active (High) for a certain period. In this certain period, all the first reset signal lines RSTi (i = 1 to n) become active (High). This causes all the first light sensor circuits SEi (i = 1 to n) to be reset (the capacitors C of the first light sensor circuits SEi are charged in accordance with the amounts of ambient light EVL and light from the LED as shown in (b) of Fig. 4). Next, in the period Z during which the IRG is OFF (i.e., output of PD is Low) and the LED is OFF, the first read-out signal lines RWSi (i = 1 to n) sequentially become active (High). In synchronization with the first read-out signal lines RWSi, the second read-out signal lines rwsi (i = 1 to n) also sequentially become active (High). The charges on the capacitors C of the first light sensor circuits SEi (i = 1 to n) are sequentially read out and supplied to the source driver SD, while the charges on the capacitors c of the second light sensor circuits SEi (i = 1 to n) are sequentially read out and supplied to the source driver SD. The source driver SD supplies, to the display control circuit DCS, a difference between the charges (volume value) on the capacitors C of the first light sensor circuits SEi and the charges (voltage value) on the capacitors c of the second light sensor circuits sei.

In a case where a finger (or a usual pen or a reflective pen) is used instead of the light pen for input into the input display device, the input display device operates on the principle as shown in Fig. 7. Specifically, during the period X (IRG is OFF), ambient light EVL is detected by the second light sensor circuit sei (see (a) of Fig. 7). During the period Y (IRG is ON), the sum of infrared light IRL reflected by the finger and ambient light EVL is detected by the first light sensor circuit SEi (see (a) of Fig. 7). Then, the result of detection in the period X is supplied to the source driver SD (refer to Fig. 1) via the second light sensor output lines (including out shown in Fig. 1), and the result of detection in the period Y is supplied to the source driver SD (refer to Fig. 1) via the first light sensor output lines (including OUT shown in Fig. 1). The source driver SD supplies, to the display control circuit DCS, a difference between these results, i.e., a result of detection of only the infrared light IRL reflected by the finger, which result is obtained by excluding ambient light. The display control circuit DCS generates, on the basis of the result of detection of only the infrared light IRL reflected by the finger, display data corresponding to the user's input, and supplies the display data to the source driver SD. It is assumed that light (visible light) for a display, which light is generated by the BL in a transmissive touch panel, is always ON (during each of the periods X and Y).

As has been described, according to the input display device, it is possible to use not only a finger and a reflective pen etc. but also a light-emitting type input device (a light pen). With use of any of the above input devices, it is possible to effectively reduce the effect of ambient light (the input display device becomes usable even in high ambient light levels). Further, since there is a period during which the light pen 2 is in the non-light-emitting state, the input display device also contributes to the power saving of the light pen 2.

The input display device can be arranged as shown in Fig. 8. Specifically, the input display device can be arranged such that an SW is provided on the control substrate 5 so that a communication mode is selectable, in which communication between the light pen and the display device is available. In the communication mode, the light-emitting state and the non-light-emitting state of the LED of the light pen 2 are switched in a specific pattern in the period Y (period during which IRG is ON) (see Fig. 9), and the display device 3 is caused to recognize certain information from this pattern. The certain information is an authentication ID of a light pen, an eraser mode, setting of a color of the pen, and/or the level of pen pressure etc. In this communication mode, it is possible for the display device 3 to (i) read information by changing drive frequencies for the first and second light sensor circuits of the light sensor touch panel 6 according to the patterns (blink frequency) of the light-emitting state and the non-light-emitting state of the LED or (ii) read information corresponding to a change in the sum of the amounts of light during one frame.

The input display device shown in Fig. 1 includes the first light sensor circuit SEi (for use in a period during which IRG is ON) and the second light sensor circuit sei (for use in a period during which IRG is OFF) in the light sensor touch panel. Note, however, that this does not imply any limitation. It is also possible to employ an arrangement in which (i) only light sensor circuit Sei (i = 1 to n) are provided in the light sensor touch panel 6 (see Fig. 10) and (ii) the light sensor circuits Sei are used both in the period during which the IRG is ON and the period during which the IRG is OFF. The configuration of each of the light sensor circuits Sei is shown in Fig. 11 (the same as the first light sensor circuit SEi shown in Fig. 5).

Also in this arrangement, (i) when the result of detection (pressure) by the pressure element PIE is equal to or greater than a threshold, the LED is brought into its light-emitting state so that its light-emitting period overlaps a period P1 that is at least part of the period during which the infrared light generating section IRG is ON (a period during which infrared light is emitted) and (ii) the LED is brought into its non-light-emitting state so that its non-light-emitting period overlaps a period Q1 that is at least part of a period during which the infrared light generating section IRG is OFF (a period during which infrared light is not emitted) (see Fig. 12). In the light sensor touch panel, (a) in the period P1 (IRG is ON), all the light sensor circuits Sei (i = 1 to n) are simultaneously reset, (b) in a period P2 following the period P1, reading from the light sensor circuits Sei (i = 1 to n) are sequentially carried out, (c) in the period Q1 (IRG is OFF) following the period P2, all the light sensor circuits Sei (i = 1 to n) are simultaneously reset, and (d) in a period Q2 following the period Q1, reading from the light sensor circuit Sei (i = 1 to n) are sequentially carried out. Note that the periods P1 to Q2 are within one frame period (1/60 second).

This makes it possible to (i) detect, by the light sensor circuits Sei, the sum of light emitted from the light pen 2 (which is in contact with the light sensor touch panel 6) and ambient light EVL during the period P1 (IRG is ON) (see (a) of Fig. 13) and (ii) detect ambient light EVL by the light sensor circuits Sei during the period Q1 (IRG is OFF) (see (b) of Fig. 13). The result of detection in the period P1 is supplied to the source driver SD (see Fig. 11) via the light sensor output lines (including OUT shown in Fig. 11), and the result of detection in the period Q1 is also supplied to the source driver SD (see Fig. 11) via the light sensor output lines (including OUT shown in Fig. 11). The source driver SD supplies, to the display control circuit DCS, a difference between these results, i.e., a result of detection of only the light emitted from the light pen 2, which result is obtained by excluding ambient light. The display control circuit DCS generates, on the basis of the result of detection of only the light emitted from the light pen 2, display data corresponding to user's input, and supplies the display data to the source driver SD. It is assumed that light (visible light) for a display, which light is generated by the BL in a transmissive touch panel, is always ON (during each of the periods P1 to Q2).

In a case where a finger (or a usual pen or a reflective pen) is used instead of the light pen for input into the input display device shown in Fig. 11, the input display device operates on the principle as shown in (a) and (b) of Fig. 14. Specifically, (i) during the period P1 (IRG is ON), the sum of infrared light IRL reflected by the finger and ambient light EVL can be detected by the first light sensor circuit Sei (see (a) of Fig. 14) and (ii) during the period Q1 (IRG is OFF), ambient light EVL can be detected by the light sensor circuit Sei (see (b) of Fig. 14). The result of detection in the period P1 is supplied to the source driver SD (see Fig. 11) via the light sensor output lines (including OUT shown in Fig. 11), and the result of detection in the period Q1 is also supplied to the source driver SD (see Fig. 11) via the light sensor output lines (including OUT shown in Fig. 11). The source driver SD supplies, to the display control circuit DCS, a difference between these results, i.e., a result of detection of only the infraredlight IRL reflected by the finger, which result is obtained by excluding ambient light. The display control circuit DCS generates, on then basis of the result of detection of only the light emitted from the LED, display data corresponding to user's input, and then supplies the display data to the source driver SD. Note that it is assumed that light (visible light) for a display, which light is generated by the BL in a transmissive touch panel, is always ON (during each of the periods P1 to Q2).

According to the foregoing arrangement, light emission from the LED of the light pen 2 is controlled by detecting, by the photodiode PD of the light pen, light from the infrared light generating section IRG. Note, however, that this does not imply any limitation. It is also possible to employ an arrangement in which (i) data of ON/OFF of the infrared light generating section IRG is sent to the substrate circuit 5 of the light pen via Bluetooth or via a wire which connects the light pen and the display device and (ii) light emission from the LED is controlled on the basis of the data.

Further, it is possible to employ an arrangement in which ON/OFF of the infrared light generating section IRG of the backlight BL is synchronized with ON (light-emitting state)/OFF (non-light-emitting state) of the LED of the light pen 2.

An input display device of the present invention includes: a display device which recognizes an input position with a light sensor by blinking a backlight; and an input device of a light-emitting type, the input device being adapted so that (i) its light-emitting period overlaps at least a part of a period during which the backlight is ON and (ii) its non-light-emitting period overlaps at least a part of a period during which the backlight is OFF.

According to the above arrangement, for example, by carrying out recognition of an input position on the basis of (i) a result of detection by the light sensor in a period during which the backlight is ON and the input device is in its light-emitting state and (ii) a result of detection by the light sensor in a period during which the backlight is OFF and the input device is in its non-light-emitting state, it is possible to realize an input display device which can reduce the effect of ambient light and in which not only a finger and a reflective pen etc. but also a light-emitting type input device (e.g. a light pen) can be used. Note that the backlight can be (i) an illumination device for a display or (ii) a device provided for detection (detection light emitting device, e.g., invisible light generating device) which device is provided separately from the illumination device for a display.

The input display device can be arranged such that: the input device is switched between the light-emitting state and the non-light-emitting state in the period during which the backlight is ON; and the display device recognizes predetermined information from this switching pattern.

The input display device can be arranged such that the input device is in the non-light-emitting state while pressure between the input device and the display device is less than a threshold.

The input display device can be arranged such that the input device includes a photoreceptor for receiving light from the backlight, and is controlled to be in the light-emitting state or the non-light-emitting state according to a result of reception of the light.

The input display device can be arranged such that a light sensor that operates in the period during which the backlight is ON and a light sensor that operates in the period during which the backlight is OFF are provided separately from each other.

An input device of the present invention is a light-emitting type input device for use in a display device which recognizes an input position with a light sensor by blinking a backlight, said light-emitting type input device being adapted so that (i) its light-emitting period overlaps at least a part of a period during which the backlight is ON and (ii) its non-light-emitting period overlaps at least a part of a period during which the backlight is OFF.

A control method for an input device of the present invention is a method of controlling a light-emitting type input device for use in a display device which recognizes an input position with a light sensor by blinking a backlight, said method including: controlling the light-emitting type input device so that (i) a light-emitting period of the light-emitting type input device overlaps at least a part of a period during which the backlight is ON and (ii) a non-light-emitting period of the light-emitting type input device overlaps at least a part of a period during which the backlight is OFF.

The present invention is not limited to the embodiments above, but a modification of any one of the embodiments on the basis of technical common sense or a combination of such modification is encompassed in the embodiments of the present invention.

### Industrial Applicability

A light pen and a display device with an input function of the present invention are suitable for example for a mobile information processor.

### Reference Signs List

- 1: Input Display Device
- 2: Light Pen
- 3: Display Device
- 6: Light Sensor Touch Panel
- Pj: Liquid Crystal Pixel
- SEi: First Light Sensor Circuit
- Sei: Second Light Sensor Circuit
- LSD: Light Sensor Driver
- DCS: Display Control Circuit
- BL: Backlight
- IRG: Infrared Light Generating Section
- SD: Source Driver
- GD: Gate Driver
- PD: Photodiode
- PIE: Pressure Element
- TIC: Timing IC
- MC: Microcomputer

## Claims

1. An input display device, comprising:
a display device which recognizes an input position with a light sensor by blinking a backlight; and
an input device of a light-emitting type,
the input device being adapted so that (i) its light-emitting period overlaps at least a part of a period during which the backlight is ON and (ii) its non-light-emitting period overlaps at least a part of a period during which the backlight is OFF.

2. The input display device according to claim 1, wherein the input position is recognized on the basis of (i) a result of detection by the light sensor in a period during which the backlight is ON and the input device is in its light-emitting state and (ii) a result of detection by the light sensor in a period during which the backlight is OFF and the input device is in its non-light-emitting state.

3. The input display device according to claim 2, wherein:
the input device is switched between the light-emitting state and the non-light-emitting state in the period during which the backlight is ON; and
the display device recognizes predetermined information from this switching pattern.

4. The input display device according to claim 1, wherein the input device is in the non-light-emitting state while pressure between the input device and the display device is less than a threshold.

5. The input display device according to claim 1, wherein the input device includes a photoreceptor for receiving light from the backlight, and is controlled to be in the light-emitting state or the non-light-emitting state according to a result of reception of the light.

6. The input display device according to claim 2, wherein a light sensor that operates in the period during which the backlight is ON and a light sensor that operates in the period during which the backlight is OFF are provided separately from each other.

7. A light-emitting type input device for use in a display device which recognizes an input position with a light sensor by blinking a backlight,
said light-emitting type input device being adapted so that (i) its light-emitting period overlaps at least a part of a period during which the backlight is ON and (ii) its non-light-emitting period overlaps at least a part of a period during which the backlight is OFF.

8. A method of controlling a light-emitting type input device for use in a display device which recognizes an input position with a light sensor by blinking a backlight, said method comprising:
controlling the light-emitting type input device so that (i) a light-emitting period of the light-emitting type input device overlaps at least a part of a period during which the backlight is ON and (ii) a non-light-emitting period of the light-emitting type input device overlaps at least a part of a period during which the backlight is OFF.
